# EUROPEAN PATENT SPECIFICATION

(11) **EP 2 525 144 B1**
(45) Date of publication and mention of the grant of the patent: **05.10.2016**
(21) Application number: 12003759.3
(22) Date of filing: 11.05.2012
(51) Int. Cl.: F21V 23/00, F21S 8/02, H05B 33/08

(54) **Lighting device and lighting instrument**
Beleuchtungsvorrichtung und Beleuchtungsinstrument
Dispositif d'éclairage et instrument d'éclairage

(30) Priority: 17.05.2011 JP 2011110830
(43) Date of publication of application: 21.11.2012
(73) Proprietor: Panasonic Intellectual Property Management Co., Ltd., Osaka 540-6207 (JP)
(72) Inventor: Matsumoto, Hiroyuki, Osaka 540-6207 (JP); Ootubo, Atusi, Osaka 540-6207 (JP); Kouno, Tadahiro, Osaka 540-6207 (JP); Matsuzaki, Jun, Osaka 540-6207 (JP); Yamashita, Koji, Osaka 540-6207 (JP); Minaki, Sinsuke, Osaka 540-6207 (JP)
(74) Representative: Samson & Partner Patentanwälte mbB

(56) References cited:
- EP-A2- 2 244 533
- DE-U1-202010 000 890
- US-A1- 2008 083 929
- US-A1- 2009 154 156
- US-A1- 2011 006 689

## Description

### Field of the Invention

The present invention relates to a lighting device employing LED light sources and a lighting instrument using the lighting device.

### Background of the Invention

There are conventionally known lighting instruments such as a guide lamp and a signal lamp, in which an LED is used as a light source (see, e.g., Japanese Patent Application Publication No. 2007-258033, Fig. 4). As shown in Fig. 9, a lighting instrument 100 disclosed in Japanese Patent Application Publication No. 2007-258033 is a guide lamp for guiding a human to, e.g., an emergency exit. In the front portion of a box-shaped instrument body, there is provided a display plate having a design for guidance of a human to an emergency exit. An LED substrate 102 mounted with a plurality of LEDs 101 is stored within the instrument body. The LED substrate 102 is connected to an on-off unit 104 through a connector 103.

The LED substrate 102 includes a plural number of LED arrays formed by alternately and serially connecting a plurality of linearly arranged LEDs 101. The light emitted from the LEDs 101 of the LED substrate travels through a light guide plate and illuminates the display plate arranged on the projecting surface of the light guide plate, thereby visualizing the design for guidance of a human to an emergency exit.

The lighting instrument 100, in which the LEDs 101 are merely mounted to the LED substrate 102 as set forth above, is easily affected by an external noise or a noise coming from an on-off unit 104 connected to the lighting instrument 100. This may sometimes lead to a malfunction of the LEDs 101 including a flicker caused by the on-off operation thereof or a breakage of the LEDs 101. In light of this, it is thinkable to dispose a protector element (e.g., a capacitor) for protecting the LEDs 101. However, if the protector element is connected to the LEDs 101, there is posed a problem in that the LED substrate 102 grows larger and the lighting instrument 100 becomes bigger.

EP 2 244 533 A2 refers to a light emitting device and an illumination apparatus. A plurality of LED elements are connected in series between positive and negative lines and a first bypass capacitor is connected in parallel to the elements, respectively. Each series and circuit of a predetermined number of LED elements is connected in parallel to second bypass capacitors.

US 2011/0006689 A1 refers to an apparatus for controlling one or multiple lighting sources such as those powered by driver circuits to provide an alternative current path around a failed lighting source when one or more individual lighting sources fail.

DE 20 2010 000 890 U1 refers to a line arrangement for an LED lamp comprising an LED lamp unit, having a multitude of LED lamps, a multitude of series resistors and a multitude of bypassing resistors. The multitude of LED lamps is in a series connection while the series resistors are connected in series to one terminal of an LED lamp, respectively, and wherein the bypassing resistors are connected in series to each other and in parallel to the series connection of the LED lamps and the series resistors.

US 2009/0154156 A1 discloses an integrally formed single piece light emitting diode light wire that provides a smooth, uniform lighting effect from all directions of the LED light wire. The integrally formed single piece LED light wire includes a support substrate, a conductive base formed on the substrate, the conductive bus comprising a plurality of conductive bus elements, at least one conductive segment arranged between the plurality of conductive bus elements, the at least one conductive segment comprising at least one LED. The integrally formed single piece LED light wire may include built-in sensors/detectors and/or a plurality of LED modules with individually controlled LEDs via microprocessors.

### Summary of the Invention

In view of the above, the present invention provides a lighting device and a lighting instrument capable of protecting LEDs and capable of deterring an increase in the size of the lighting device mounted with the LEDs and consequently reducing the size or thickness of the lighting instrument.

In accordance with the embodiment of the present invention, there is provided a lighting device, including: a plurality of LED light sources; an LED substrate mounted with the LED light sources; and a plurality of protector elements mounted on the LED substrate to protect the LED light sources, wherein each of the LED light sources and the corresponding protector element is combined into a source-element set, and the source-element sets are arranged substantially on one straight line, each of the protector elements being arranged between the LED light sources of the adjacent source-element sets.

The LED light sources and the protector elements may be arranged substantially on one straight line, each of the protector elements being arranged between the straight line and one of lateral surfaces of the LED substrate at the opposite side from connection portion of the LED light sources adjacent thereto.

A lighting instrument may include the lighting device described above.

With the present invention, the lighting device comprises a plurality of source-element sets, each of the source-element sets has a LED light source and a protector element connected in parallel to the LED light source to protect the LED light source, and an LED substrate on which LED light sources and protector elements of the source-element sets are mounted. The LED light sources and the protector elements are alternately arranged substantially on one straight line, each of the protector elements being arranged between the straight line and one of lateral surfaces of the LED substrate at the opposite side from a connection portion of the LED light sources adjacent thereto, wherein only one protector element is disposed between every two neighboring LED light sources.

Consequently, it is possible to provide a lighting device and a lighting instrument capable of deterring an increase in the size of the lighting device and the lighting instrument mounted with the LED light sources.

### Brief Description of the Drawings

The objects and features of the present invention will become apparent from the following description of embodiments, given in conjunction with the accompanying drawings, in which:
Fig. 1 is an overall bottom perspective view of a lighting instrument according to the embodiment of the present invention;
Fig. 2 is an exploded bottom perspective view of a lighting instrument;
Fig. 3 is a section view of the lighting instrument according to the present invention which is taken along a centerline;
Fig. 4 is a top plan view of the lighting instrument according to the present invention;
Fig. 5 is a plan view showing the arrangement of two different kinds of LED light sources mounted to an LED substrate of an LED unit not covered by the claims;
Fig. 6 is an enlarged view showing the portion designated by VI in Fig. 5;
Fig. 7 is a plan view showing the arrangement of one kind of LED light sources mounted to an LED substrate of an LED unit according to the present invention;
Fig. 8 is an enlarged view showing the portion designated by VIII in Fig. 7; and

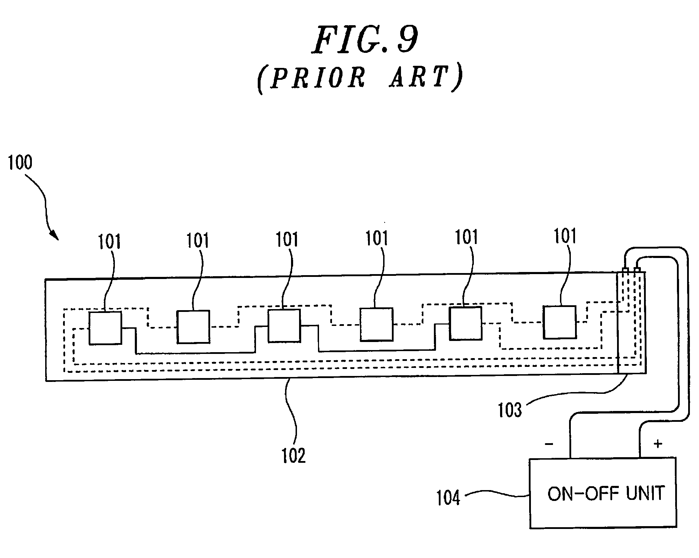

Fig. 9 is a plan view illustrating the arrangement of LEDs in a conventional lighting device.

### Detailed Description of the Preferred Embodiments

A lighting device and a lighting instrument according to the present invention will now be described with reference to the accompanying drawings which form a part hereof. The following description is directed to a case in which illumination is performed by attaching a lighting instrument to a ceiling surface as a target installation surface. Unless specifically mentioned otherwise, the term "upper (upward)" denotes the side of a ceiling surface and the term "lower (downward)" signifies the side of a floor surface.

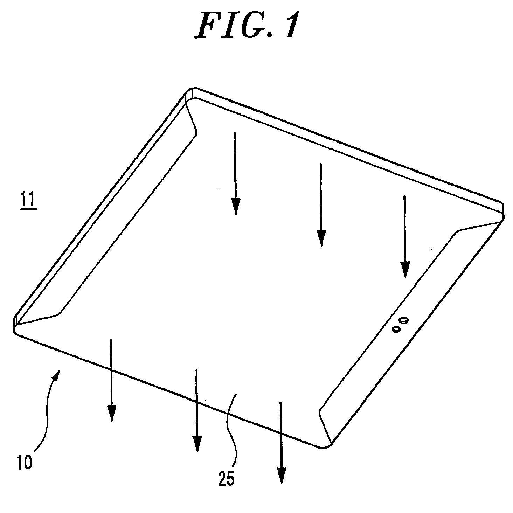

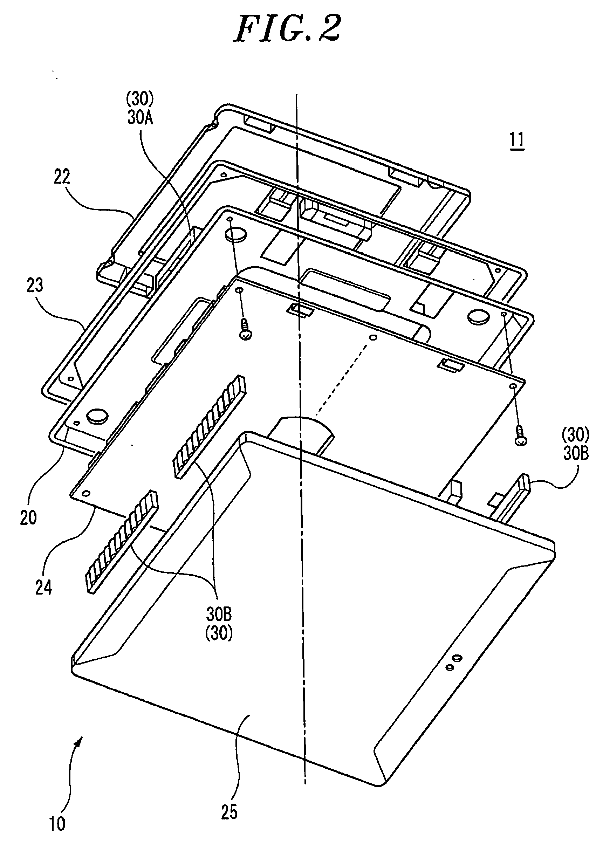

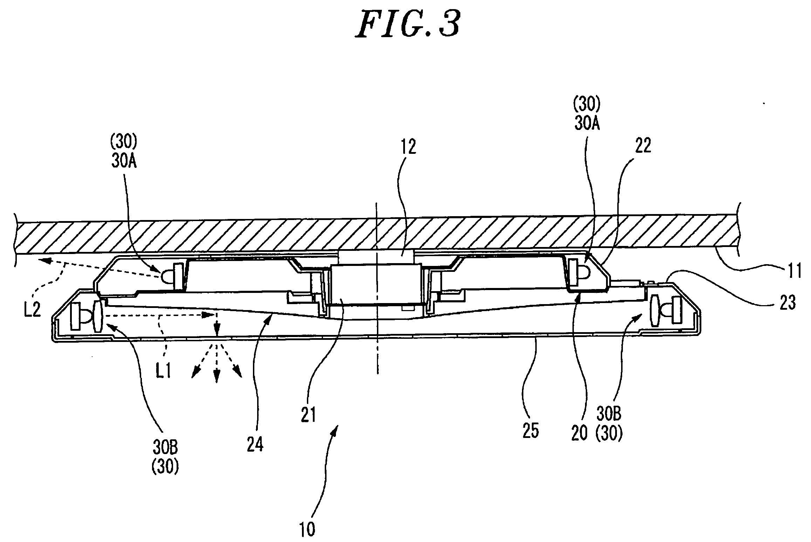

As shown in Fig. 1, the lighting instrument 10 according to the present invention is attached to a ceiling surface 11 as a target installation surface and is suitable for illuminating a lower area. As shown in Figs. 2 and 3, the lighting instrument 10 includes an instrument body 20 having, e.g., a rectangular plate-like shape. The instrument body 20 is provided at the center thereof with a clasp 21 to be attached to a hanger 12 fixed to the ceiling surface 11.

Upper units 30A making up an LED unit 30 as a lighting device, an upper frame 23 and an upper panel 22 are provided at the upper side of the instrument body 20 (namely, at the side of the ceiling surface 11). Lower units 30B making up the LED unit 30 and a reflector plate 24 as a reflection member are provided at the lower side of the instrument body 20 (namely, at the illuminated side). A light-transmitting panel (lower panel) 25 for diffusing the received light is attached below the reflector plate 24.

Next, description will be made on the upper units 30A and the lower units 30B making up the LED unit 30 as a lighting device according to the first embodiment of the present invention. In the following description, the lighting device will be referred to as LED unit 30 unless the upper units 30A and the lower units 30B need to be specifically distinguished from each other.

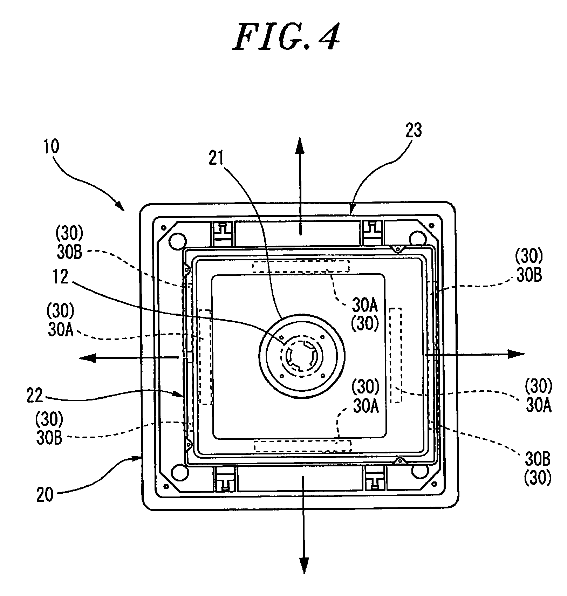

As shown in Fig. 4, the upper units 30A are arranged in an outwardly facing posture on four sides at the upper side of the instrument body 20. The lower units 30B are arranged at two points at the lower side of the instrument body 20 and are configured to irradiate light inward.

In the lighting instrument 10 employing the LED unit 30 stated above, as shown in Fig. 3, the light L1 emitted from the lower units 30B toward the inside of the lighting instrument 10 is reflected downward by the reflector plate 24 and is incident on the panel 25. Then, the light is diffused by the panel 25. Accordingly, the panel 25 as a whole serves as a light source and illuminates a lower area.

On the other hand, the light L2 emitted from the upper units 30A toward the outside of the lighting instrument 10 is irradiated on the ceiling surface 11 to illuminate the ceiling surface 11 and the wall surface (not shown).

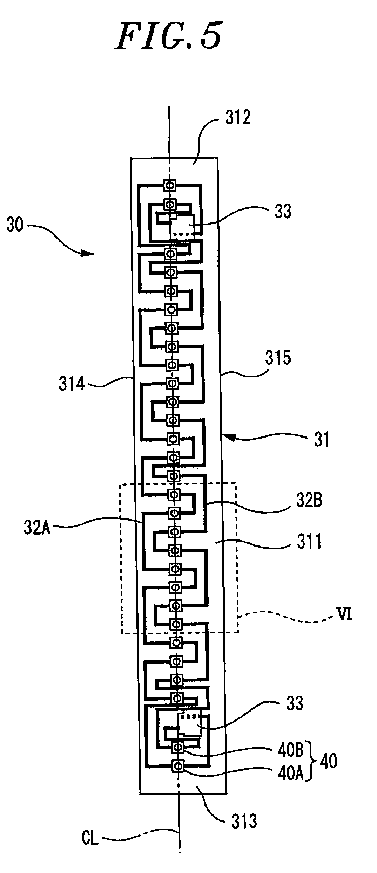

As shown in Fig. 5, the LED unit 30 includes different kinds of LED light sources, i.e., a plurality of first LED light sources 40A and a plurality of second LED light sources 40B, which are mounted on the mounting surface of an LED substrate 31.

In the following description, the two kinds of LED light sources 40A and 40B are generally referred to as "LED light sources 40", if such a need arises.

In the first LED light sources 40A and the second LED light sources 40B, LED light source groups each including an even number of LED light sources (e.g., two LED light sources in the present embodiment) are alternately arranged along the LED substrate 31 except some portions (the opposite end portions). LED light sources 40 differing in kind from the LED light sources 40 positioned along the intermediate portion of the LED substrate 31 are arranged in the opposite end portions of the LED substrate 31.

The first LED light sources 40A are serially connected by a first circuit 32A. The second LED light sources 40B are serially connected by a second circuit 32B to form a circuit system differing from that of the first LED light sources 40A.

The first circuit 32A and the second circuit 32B are formed independently of each other and can be arranged into, e.g., a crank shape. At this time, the first circuit 32A and the second circuit 32B are arranged substantially parallel to each other.

Connectors 33 are attached to the mounting surface 311 of the LED substrate 31 and are positioned inward of the LED light sources 40 existing in the end portions of the LED substrate 31, when seen from the longitudinal opposite end portions 312 and 313 of the LED substrate 31. Electric wiring lines extending from a commercial power source (not shown) are connected to the connectors 33 to supply electric power to the connectors 33. The electric power is supplied to the first LED light sources 40A through the first circuit 32A to turn on the first LED light sources 40A. Similarly, the electric power is supplied to the second LED light sources 40B through the second circuit 32B to turn on the second LED light sources 40B. This means that the first LED light sources 40A and the second LED light sources 40B can be controlled independently of each other.

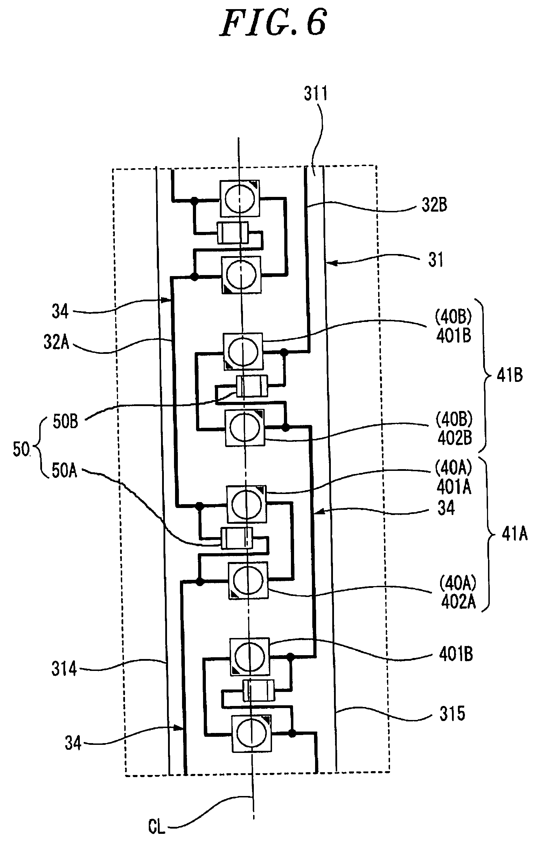

As shown in Fig. 6, a capacitor 50A as a protector element is connected to each LED light source group (41A) including an even number of (e.g., two, in the present embodiment) LED light sources 40A (401A and 402A) serially connected by the first circuit 32A.

In this regard, the LED light sources 40A of each group 41A and the capacitor 50A are arranged substantially on one straight line (e.g., on the centerline CL of the LED substrate 31). If the capacitor 50A is arranged in a wide space nearer to the lateral surfaces 314 and 315, the capacitor 50A and the wiring line for connecting the capacitor 50A occupy an increased area. In light of this, the capacitor 50A is arranged between the first LED light sources 401A and 402A.

The capacitor 50A is arranged between the center (centerline CL) and the lateral surface 314 or 315 at the opposite side from the connection portion 34 for interconnecting the first LED light sources 40A or the second LED light sources 40B.

This holds true in case of the second circuit 32B. A capacitor 50B as a protector element is connected to each LED light source group (41B) including an even number of (e.g., two, in the present embodiment) LED light sources 40B (401B and 402B) serially connected by the second circuit 32B.

In the following description, the capacitors 50A and 50B will be generally referred to as "capacitors 50", if such a need arises. Likewise, the LED light source groups 41A and 41B will be generally referred to as "LED light source groups 41", if such a need arises.

The capacitors 50 are electrically connected so as to straddle the upstream and downstream sides of the respective LED light source groups 41. For example, in case of the first circuit 32A, the capacitor 50A is connected so as to straddle the anode side of the LED light source 401A and the cathode side of the LED light source 402A serially connected to the LED light source 401A. This holds true in case of the second circuit 32B.

In order to turn on the LED light sources 40, a relatively large current need to be supplied to the first circuit 32A and the second circuit 32B. If the LED light sources 40 have an output of about 1 W, an electric current of from about 300 mA to about 500 mA is supplied to the first circuit 32A and the second circuit 32B.

At this time, the copper foil patterns on the LED substrate 31 need to be formed as large as possible in order to restrain heat generation in the LED light sources 40 and to reduce current loss.

In other words, as shown in Fig. 6, the copper foil patterns of the first circuit 32A and the second circuit 32B need to be formed thick in order to supply an electric current to the LED light sources 40. More specifically, the copper foil patterns of the cathode of the LED light source 401A and the anode of the LED light source 402A and the copper foil patterns of the cathode of the LED light source 402B and the anode of the LED light source 401B are formed as thick as possible.

Since the LED substrate 31 has a small width, the capacitors 50 are arranged in the positions shifted a little away from the copper foil patterns (connection portions 34). This holds true in other portions. If a plurality of copper foil patterns exists between the LED light sources 40 and the lateral surfaces of the LED substrate 31, the capacitors 50 are arranged in the positions shifted to the opposite side from the copper foil patterns.

Next, description will be made on a lighting device and a lighting instrument according to the present invention. The portions common to the lighting device and the lighting instrument of the first embodiment will be designated by like reference numerals with no description made thereon.

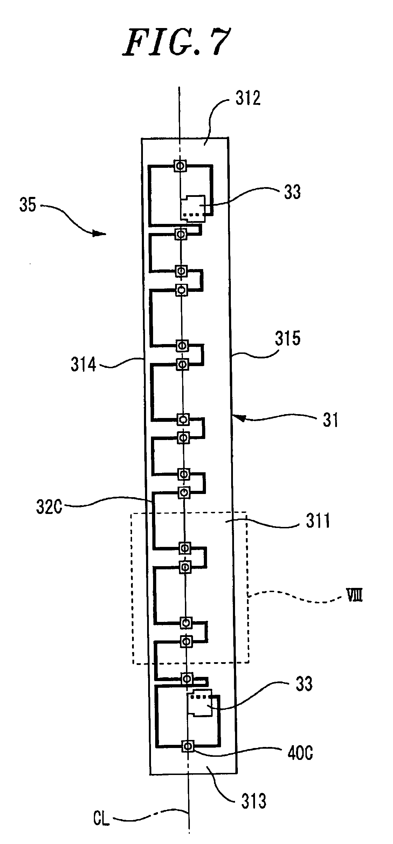

In a LED unit 35 as the lighting device of the present invention as shown in Fig. 7, a plurality of LED light sources 40C is mounted on the mounting surface 311 of the LED substrate 31. In other words, the LED unit 35 includes only one circuit 32C corresponding to the first circuit 32A of the first embodiment. The LED light sources 40C are serially connected by the circuit 32C.

Connectors 33 are attached to the mounting surface 311 of the LED substrate 31 and are positioned inward of the LED light sources 40 existing in the end portions of the LED substrate 31, when seen from the longitudinal opposite end portions 312 and 313 of the LED substrate 31. Electric wiring lines extending from a commercial power source (not shown) are connected to the connectors 33 to supply electric power to the connectors 33. The electric power is supplied to the LED light sources 40C through the circuit 32C to turn on the LED light sources 40C.

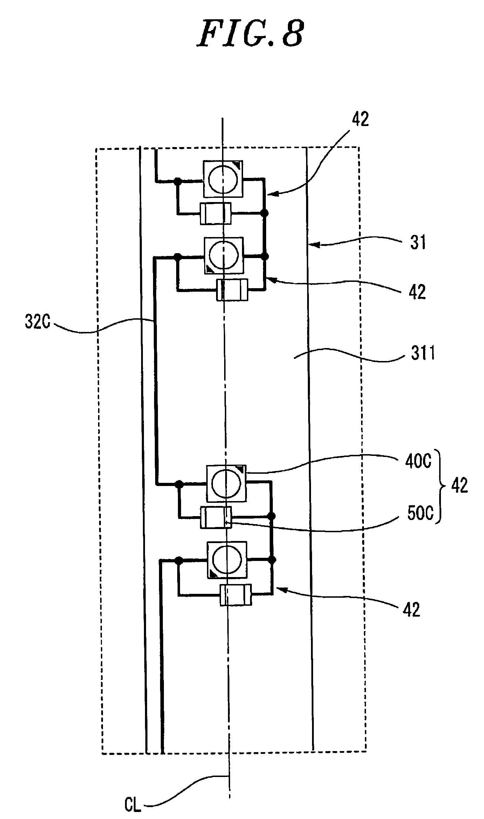

As shown in Fig. 8, each of the LED light source 40C and the corresponding capacitor 50C are combined into a source-capacitor set 42. The sets of the LED light source 40C and the capacitor 50C are serially connected by the circuit 32C. In other words, The source-capacitor sets 42 are arranged substantially on one straight line (e.g., the centerline CL of the LED substrate 31). The capacitors 50C are arranged between the LED light sources 40C of the respective source-capacitor sets 42.

Further, the capacitor 50C is connected in parallel to the LED light source 40C.

With the LED unit 35 according to the second embodiment of the present invention, the LED light sources 40C and the capacitors 50C are combined into a plurality of source-capacitor sets 42. The respective source-capacitor sets 42 are arranged substantially on the centerline CL. The capacitors 50C are arranged between the LED light sources 40C of the respective source-capacitor sets 42. This makes it possible to provide the same effects as provided by the lighting device and the lighting instrument of the first embodiment. By connecting the capacitors 50C to the LED light sources 40C, it is possible to reliably protect the LED light sources 40C and to provide a highly reliable LED unit 35.

The LED units 30 and 35 and the lighting instruments 10 of the present embodiment are not limited to the respective embodiments described above but may be arbitrarily modified or improved. For example, while the capacitors 50 (50A and 50B), 50C are used as the protector elements in the foregoing embodiments, other protector elements can be used insofar as the impedance thereof is lower than the impedance of the LED light sources.

While the invention has been shown and described with respect to the embodiment, the present invention is not limited thereto. It will be understood by those skilled in the art that various changes and modifications may be made without departing from the scope of the invention as defined in the following claims.

## Claims

1. A lighting device (30), comprising:
a plurality of source-element sets (42), each of the source-element sets (42) having a LED light source (40C) and a protector element (50C) connected in parallel to the LED light source (40C) to protect the LED light source (40C); and
an LED substrate (31) on which LED light sources (40C) and protector elements (50C) of the source-element sets (42) are mounted, the lighting device (30) being **characterized in that**
the LED light sources (40C) and the protector elements (50C) are alternately arranged substantially on one straight line (CL), each of the protector elements (50C) being arranged between the straight line (CL) and one of lateral surfaces of the LED substrate (31) at the opposite side from a connection portion of the LED light sources (40C) adjacent thereto, wherein only one protector element (50C) is disposed between every two neighboring LED light sources (40C).

2. A lighting instrument (10) comprising the lighting device (30) of claim 1.

## Patentansprüche

1. Beleuchtungsvorrichtung (30) umfassend:
mehrere Quellenelemente-Sets (42), wobei jedes der Quellenelemente-Sets (42) eine LED-Lichtquelle (40C) und ein Schutzvorrichtungselement (50C) umfasst, das parallel zu der LED-Lichtquelle (40C) geschaltet ist, um die LED-Lichtquelle (40C) zu schützen; und
ein LED-Substrat (31), auf dem die LED-Lichtquellen (40C) und Schutzvorrichtungselemente (50C) der Quellenelemente-Sets (42) befestigt sind, wobei die Beleuchtungsvorrichtung (30) **dadurch gekennzeichnet ist, dass**
die LED-Lichtquellen (40C) und die Schutzvorrichtungselemente (50C) alternierend im Wesentlichen auf einer geraden Linie (CL) angeordnet sind, wobei jedes der Schutzvorrichtungselemente (50C) zwischen der geraden Linie (CL) und einer von seitlichen Flächen des LED-Substrats (31) an der gegenüberliegenden Seite von einem Verbindungsbereich der LED-Lichtquellen (40C) angrenzend dazu angeordnet sind, wobei nur ein Schutzvorrichtungselement (50C) zwischen jeden zwei benachbarten LED-Lichtquellen (40C) angeordnet ist.

2. Beleuchtungsinstrument (10) umfassend die Beleuchtungsvorrichtung (30) gemäß Anspruch 1.

## Revendications

1. Dispositif d'éclairage (30), comprenant :
une pluralité de jeux d'éléments de source (42), chacun des jeux d'éléments de source (42) ayant une source de lumière LED (40C) et un élément de protection (50C) connecté en parallèle à la source de lumière LED (40C) afin de protéger la source de lumière LED (40C) ; et
un substrat de LED (31) sur lequel des sources de lumière LED (40C) et des éléments de protection (50C) des jeux d'éléments de source (42) sont montés, le dispositif d'éclairage (30) étant **caractérisé en ce que** :
les sources de lumière LED (40C) et les éléments de protection (50C) sont agencés en alternance sensiblement sur une ligne droite (CL), chacun des éléments de protection (50C) étant agencé entre la ligne droite (CL) et l'une de surfaces latérales du substrat de LED (31) au niveau du côté opposé par rapport à une partie de connexion des sources de lumière LED (40C) en adjacence, dans lequel seulement un élément de protection (50C) est disposé entre chaque jeu de deux sources de lumière LED (40C) voisines.

2. Instrument d'éclairage (10) comprenant le dispositif d'éclairage (30) selon la revendication 1.
